# EUROPEAN PATENT SPECIFICATION

(11) **EP 4 264 256 B1**
(45) Date of publication and mention of the grant of the patent: **04.11.2026**
(21) Application number: 21904732.1
(22) Date of filing: 16.12.2021
(51) Int. Cl.: G01N 30/86, G01N 21/71, G01N 30/62

(54) **METHOD AND SYSTEM FOR CHROMATOGRAPHICALLY ANALYZING A TEST SAMPLE**
VERFAHREN UND SYSTEM ZUR CHROMATOGRAPHISCHEN ANALYSE EINER TESTPROBE
PROCÉDÉ ET SYSTÈME D'ANALYSE CHROMATOGRAPHIQUE D'UN ÉCHANTILLON D'ESSAI

(30) Priority: 16.12.2020 US 202063126139 P
(43) Date of publication of application: 25.10.2023
(73) Proprietor: Mécanique Analytique Inc., Thetford Mines, QC G6G 7W1 (CA)
(72) Inventor: GAMACHE, Yves, Thetford Mines, Québec G6G 7W1 (CA)
(74) Representative: Modiano, Gabriella Diana
(86) International application number: PCT/CA2021/051819
(87) International publication number: WO 2022/126272

(56) References cited:
- WO-A1-2021/113977
- WO-A2-2015/169686
- US-A- 5 009 099
- US-A1- 2018 038 800
- DROLLETTE BRIAN D., BRENNEIS REBECCA J., PLATA DESIREE L.: "Oligomer-Specific, Short Chain Linear Alcohol Ethoxylate Quantification via Comprehensive Two-Dimensional Gas Chromatography", ENVIRONMENTAL SCIENCE & TECHNOLOGY LETTERS, AMERICAN CHEMICAL SOCIETY, US, vol. 5, no. 9, 11 September 2018 (2018-09-11), US , pages 539 - 545, XP055946534, ISSN: 2328-8930, DOI: 10.1021/acs.estlett.8b00358
- PARDUE HARRY L, BURKE MICHAEL F, BARNES JACK R: "Quantitative Gas Chromatography: An experiment", J. OF CHEMICAL EDUCATION, vol. 44, no. 11, 1 November 1967 (1967-11-01), pages 695 - 698, XP055946538
- GUIOCHON ET AL.: "Chapter 14 Quantitative Analysis By Gas Chromatography Response Factors. Determination. Accuracy and Precision", JOURNAL OF CHROMATOGRAPHY LIBRARY, ELSEVIER, AMSTERDAM, NL, vol. 42, 31 December 1987 (1987-12-31), NL , pages 587 - 627, XP009548241, ISSN: 0301-4770, DOI: 10.1016/S0301-4770(08)70086-1
- GURKA DONALD F., PYLE STEVEN, TITUS RICHARD: "Environmental Applications of Gas Chromatography/Atomic Emission Detection", ANALYTICAL CHEMISTRY, AMERICAN CHEMICAL SOCIETY, US, vol. 69, no. 13, 1 July 1997 (1997-07-01), US , pages 2411 - 2417, XP055946542, ISSN: 0003-2700, DOI: 10.1021/ac9612739
- LI ET AL.: "Evaluation of compound-independent calibration using gas chromatography with atomic emission detection", TALANTA, vol. 95, 29 March 2012 (2012-03-29), pages 36 - 41, XP028501650, DOI: 10.1016/j.talanta.2012.03.044
- KARU EINAR, LI MENGZE, ERNLE LISA, BRENNINKMEIJER CARL A. M., LELIEVELD JOS, WILLIAMS JONATHAN: "Atomic emission detector with gas chromatographic separation and cryogenic pre-concentration (CryoTrap–GC–AED) for atmospheric trace gas measurements", ATMOSPHERIC MEASUREMENT TECHNIQUES, COPERNICUS PUBLICATIONS, DE, vol. 14, no. 3, 4 March 2021 (2021-03-04), DE , pages 1817 - 1831, XP055946546, ISSN: 1867-1381, DOI: 10.5194/amt-14-1817-2021
- PACER ET AL.: "Quantitative Gas Chromatography Using Peak Heights and Relative Response Factors", J. OF CHEMICAL EDUCATION, vol. 53, no. 9, September 1976 (1976-09-01), pages 592 - 593, XP055786219, DOI: 10.1021/ed053p592

## Description

### TECHNICAL FIELD

The technical field generally relates to gas detection, and more particularly, to methods and systems for chromatographically analyzing a test sample.

### BACKGROUND

Many different types of gas detectors and gas detection technologies are known in the art. Nonlimiting examples of detectors include but are not limited to Photoionization Detector (PID), Flame Ionization Detectors (FID), Electron Capture Detectors (ECD), Thermal Conductivity Detectors (TCD), Photoionization Detectors (PID) and Mass spectrometers (MS). These detectors can be used in a broad variety of chromatographic applications such as, for example and without being limitative, gas chromatography applications.

An important characteristic of a detector is the response factor. In chromatography applications, the response factor may be related to a ratio between the concentration of a sample being detected and the response of the detector to that sample.

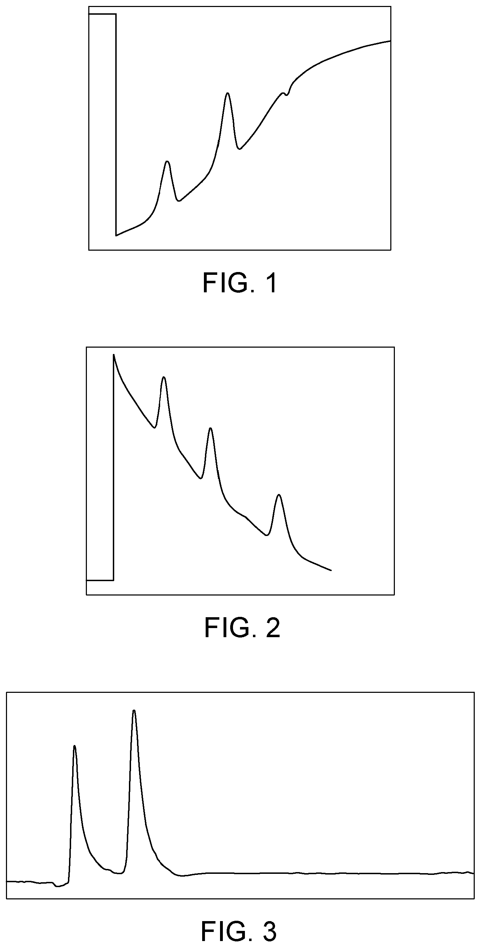

Known detectors and associated methods generally produce chromatograms having one or more chromatographic artefacts or defects. Nonlimitative examples of chromatographic artefacts include baseline drifting and peak tailing. Figures 1 to 3 illustrate three examples of chromatographic artefacts. Figures 1 and 2 illustrate the effect of a drift in the baseline, while Figure 3 shows the effect of peak tailing. A drifting baseline may be caused by column bleeding and/or by the balance of the sample background slowly eluting from the column. Peak tailing may be caused by the gas chromatography columns or components thereof. For example, and without being limitative, peak tailing may be caused by a plurality of factors, such as bleeding, physical desorption or change in system equilibrium, system inertness, weakness (j.e., presence of reacting sites), and in the case of plasma emission detectors, by residual charges that are trapped into and delayed by the electromagnetic field that maintains the plasma. Of note, residual charges that are trapped in the plasma are generally constant, regardless of the impurity level. As such, the peak tailing caused by residual charges may not be visually perceptible at high concentration but may become problematic or otherwise apparent at lower concentration, near the lower limit of detection of the detector.

Techniques for reducing the impact of chromatographic artefacts are known in the art. Nonlimitative examples of such techniques include operating a detector in a heart cut configuration or a backflush configuration. However, such techniques are known to be somewhat inefficient under some circumstances. As a result, chromatograms produced by conventional detectors still present chromatographic artefacts that affect sample characterization, even after application of artefact correction techniques. For at least these reasons, existing chromatographic artefact correction techniques does not allow mitigating the negative impacts of the chromatographic artefacts in a satisfying manner.
US 5 009 099 discloses a method of correcting for changes in background radiation in a plasma emission detector for analyzing the output of a gas chromatograph comprising a plurality of sensors associated with specific emission frequencies. A sensor is associated with at least one principal carbon emission frequency and another sensor is associated with a frequency of emission of another element.

Therefore, challenges remain in the field of techniques for chromatographically analyzing a sample.

### SUMMARY

The present techniques generally relate to chromatographic-artefact compensation using real-time or near real-time response factor adjustment of a detector. The scope of the invention is defined in the appended claims.

In accordance with one aspect of the invention, there is provided a method according to claim 1 for chromatographically analyzing a test sample, the method including: obtaining a sample chromatogram of the test sample with a chromatography system, the chromatography system including a detector having an adjustable response factor; and adjusting, while obtaining the sample chromatogram, the response factor of the detector based on a compensation signal for compensating expected chromatographic artefacts to obtain an artefact- compensated sample chromatogram.

In some embodiments, the method further includes determining the compensation signal.

In some embodiments, said determining the compensation signal is based at least partly on calibration data, the calibration data including artefact information about the expected chromatographic artefacts.

In some embodiments, the method further includes obtaining the calibration data from a control sample chromatographically representative of the test sample.

In some embodiments, said determining the compensation signal is based on calibration data obtained from a control sample and a scaling factor representative of a deviation between the calibration data and sample data measured during said obtaining the sample chromatogram.

In some embodiments, the expected chromatographic artefacts are real-time expected chromatographic defects, the response factor of the detector being adjusted in real-time or near real-time.

In some embodiments, the compensation signal includes a peak tailing compensation signal component.

In some embodiments, the peak tailing compensation signal component is determined based on a mirror function.

In some embodiments, the compensation signal includes a base line drift compensation signal component.

In some embodiments, said determining the compensation signal is performed entirely during said obtaining the sample chromatogram and said adjusting the response factor of the detector.

According to the invention, the method further includes circulating the test sample in a plasma chamber of the detector.

The method further includes generating a plasma from the test sample.
Said generating the plasma in the test sample includes applying a plasma generating field across the plasma chamber to generate the plasma from the test sample.

Said adjusting the response factor of the detector includes adjusting the plasma generating field.

In some embodiments, the method further includes measuring an optical emission of the plasma, the optical emission being representative of the test sample.

In some embodiments, the optical emission is a spectral line representative of an analyte present in the test sample.

In some embodiments, said measuring the optical emission includes obtaining a reference signal, obtaining an emission signal, and subtracting the reference signal from the emission signal.

In some embodiments, the method further includes pre-processing the artefact-compensated chromatogram.

In some embodiments, said pre-processing the artefact-compensated chromatogram includes at least one of: filtering, adjusting, and correcting one or more peaks of the artefact-compensated chromatogram.

In some embodiments, the method further includes processing the artefact-compensated chromatogram to determine at least one property of the test sample.

In some embodiments, said processing the artefact-compensated chromatogram includes performing at least one mathematical operation on the artefact-compensated chromatogram or at least one peak thereof.

In accordance with another aspect of the invention, there is provided a chromatography system according to claim 12 for chromatographically analyzing a test sample, the system including: a detector having an adjustable response factor, the detector being configured for obtaining a sample chromatogram of the test sample; and a control and processing unit coupled to the detector and configured for: adjusting, while the sample chromatogram is obtained by the detector, the response factor of the detector based on a compensation signal for compensating expected chromatographic artefacts to obtain an artefact-compensated sample chromatogram.

In some embodiments, the control and processing unit is further configured for determining the compensation signal.

In some embodiments, said determining the compensation signal is based at least partly on calibration data, the calibration data including artefact information about the expected chromatographic artefacts.

In some embodiments, the control and processing unit is further configured for obtaining the calibration data from a control sample chromatographically representative of the test sample.

In some embodiments, said determining the compensation signal is based on calibration data obtained from a control sample and a scaling factor representative of a deviation between the calibration data and sample data measured during said obtaining the sample chromatogram.

In some embodiments, the expected chromatographic artefacts are real-time expected chromatographic defects, the response factor of the detector being adjusted in real-time or near real-time.

In some embodiments, the compensation signal includes a peak tailing compensation signal component.

In some embodiments, the peak tailing compensation signal component is determined based on a mirror function.

In some embodiments, the compensation signal includes a base line drift compensation signal component

In some embodiments, said determining the compensation signal is performed entirely during said obtaining the sample chromatogram and said adjusting the response factor of the detector.

According to the invention, the detector is a plasma-based detector.

The plasma-based detector includes: a plasma chamber configured for receiving the test sample; a plasma generator configured for applying a plasma generating field across the plasma chamber to generate a plasma from the test sample; and an optical detection module configured for detecting optical emissions emitted from the plasma and producing a detection signal, the sample chromatogram being generated from the detection signal.

Said adjusting the response factor of the detector includes adjusting the plasma generating field.

In some embodiments, the optical emissions are spectral lines representative of an analyte present in the test sample.

In some embodiments, the control and processing unit is further configured for pre-processing the artefact-compensated chromatogram.

In some embodiments, said pre-processing the artefact-compensated chromatogram includes at least one of: filtering, adjusting, and correcting one or more peaks of the artefact-compensated chromatogram.

In some embodiments, the control and processing unit is further configured for processing the artefact-compensated chromatogram to determine at least one property of the test sample.

In some embodiments, said processing the artefact-compensated chromatogram includes performing at least one mathematical operation on the artefact-compensated chromatogram or at least one peak thereof.

In accordance with another aspect, there is provided a method for chromatographically analyzing a test sample, the method including: generating a plasma from the test sample in a plasma cell of a chromatography system, using a plasma generator of the chromatography system; determining operating conditions of the plasma, said determining the operating conditions including: determining an operating frequency of the plasma generator; and/or determining an operating current and/or an operating voltage of the plasma generator; generating a compensation signal, based on the operating conditions of the plasma, the compensation signal being sent towards a detector having an adjustable response factor, the compensation signal causing an adjustment of the response factor of the detector for compensating expected chromatographic artefacts; and obtaining a sample chromatogram of the test sample with the detector, during the adjustment of the response factor of the detector, to obtain an artefact-compensated sample chromatogram.

In some embodiments, said generating the plasma includes ramping a voltage applied across discharge electrodes until the voltage reaches a breakdown voltage to generate the plasma in the plasma cell.

In some embodiments, said determining the operating frequency is based on a power or energy consumption of the chromatography system, the power or energy consumption of the chromatography system being minimal or close to a minimum at the operating frequency.

In some embodiments, said determining the operating frequency is based on an intensity of optical emissions emitted from the plasma, the intensity of the optical emissions being maximal or close to a maximum at the operating frequency.

In some embodiments, said determining the operating frequency includes sweeping the frequencies generated by the plasma generator.

In some embodiments, the operating current and/or operating voltage are selected to correspond to a fraction of a maximal power or energy reachable by the chromatography system.

In some embodiments, the method further includes operating the plasma generator to produce frequency bursts.

In some embodiments, the frequency bursts are generated according to a pattern.

Further disclosed, but not part of the claimed subject-matter, is a system for chromatographically analyzing a test sample, the system including a plasma cell configured for receiving the test sample; a plasma generator configured for applying a plasma generating field across the plasma chamber to generate a plasma from the test sample; a detector having an adjustable response factor, the detector being configured for obtaining a sample chromatogram of the test sample; and a control and processing unit coupled to the detector and configured for: determining operating conditions of the plasma, said determining the operating conditions including: determining an operating frequency of the plasma generator; and/or determining an operating current and/or an operating voltage of the plasma generator; and generating a compensation signal, based on the operating conditions of the plasma, the compensation signal being sent towards the detector and causing an adjustment of the response factor of the detector for compensating expected chromatographic artefacts, such that when the sample chromatogram of the test sample is obtained with the detector, the response factor of the detector is adjusted to obtain an artefact-compensated sample chromatogram.

In some embodiments, the plasma is generated by ramping a voltage applied across discharge electrodes until the voltage reaches a breakdown voltage to generate the plasma in the plasma cell.

In some embodiments, said determining the operating frequency is based on a power or energy consumption of the system, the power or energy consumption of the system being minimal or close to a minimum at the operating frequency.

In some embodiments, said determining the operating frequency is based on an intensity of optical emissions emitted from the plasma, the intensity of the optical emissions being maximal or close to a maximum at the operating frequency.

In some embodiments, said determining the operating frequency includes sweeping the frequencies generated by the plasma generator.

**In** some embodiments, the operating current and/or operating voltage are selected to correspond to a fraction of a maximal power or energy reachable by the system.

**In** some embodiments, the plasma generator is configured to produce frequency bursts.

**In** some embodiments, the frequency bursts are generated according to a pattern.

Further disclosed, but not part of the claimed subject-matter, is a method for chromatographically analyzing a test sample. The method includes obtaining an artefact-compensated sample chromatogram of the test sample with a chromatography system comprising a detector having an adjustable response factor. The method also includes adjusting, while obtaining the sample chromatogram, the response factor of the detector based on a compensation signal for compensating expected chromatographic artefacts.

**In** some embodiments, the compensation signal is determined based at least partly on calibration data conveying artefact information about the expected chromatographic artefacts. In some embodiments, the calibration data may be obtained from a control sample chromatographically representative of the test sample. In some embodiments, the compensation signal may be determined based on (1) calibration data obtained from the control sample and (2) a scaling factor representative of a deviation between the calibration data and sample data measured during the acquisition of the artefact-compensated sample chromatogram. For example, the compensation signal may include a peak tailing compensation signal component whose temporal profde is determined from the calibration data obtained from the control sample and whose amplitude is determined from a comparison between a peak maximum value obtained from the calibration and a peak maximum obtained during the acquisition of the artefact-compensated sample chromatogram but before the application of the peak tailing compensation signal to the response factor of the detector.

**In** some embodiments, the compensation signal is determined entirely during said concurrent obtaining and adjusting steps (e.g. , without prior calibration with a control sample or prior knowledge about the artefacts to be compensated for). In such embodiments, peak tailing may be compensated for by determining a peak tailing compensation signal component to be applied to the tailing end of a peak based on leading end information associated with the leading end of the peak and measured said the acquisition of the artefact-correct sample chromatogram, typically immediately before applying the peak tailing compensation signal to the response of the detector. For example, the peak tailing compensation signal may be determined based on a mirror function applied to the leading end information.

**In** some embodiments, the detector is a plasma-based detector including a plasma chamber configured to receive the test sample; a plasma generator configured to apply a plasma generating field across the plasma chamber to generate a plasma from the test sample; and an optical detection module configured to detect optical emissions emitted from the plasma and conveying composition information about the test sample, and generate a detection signal from which the sample chromatogram can be generated. In such embodiments, the compensation signal applied to vary the response factor of the detector may correspond to the plasma generating field. In some embodiments, the plasma generating field may be adjusted by varying an intensity of the signal, a frequency of the signal, a duty of the cycle, or any combinations thereof.

**In** accordance with another aspect, there is provided a chromatography system comprising a detector having an adjustable response factor; and a control and processing unit coupled to the detector and configured to perform various steps of the method disclosed herein.

It is to be noted that other method and process steps may be performed prior to, during, or after the steps described herein. The order of one or more steps may also differ, and some of the steps may be omitted, repeated, and/or combined, depending on the application. It is also to be noted that some method steps may be performed using various data processing techniques, which may be implemented in hardware, software, firmware, or any combination thereof.

Other objects, features, and advantages of the present description will become more apparent upon reading of the following non-restrictive description of specific embodiments thereof, given by way of example only with reference to the appended drawings.

### BRIEF DESCRIPTION OF THE DRAWINGS

Figure 1 illustrates the effect of a drift in a baseline on a chromatogram.
Figure 2 illustrates the effect of a drift in a baseline on a chromatogram.
Figure 3 illustrates the effect of peak tailing on a chromatogram.
Figure 4 illustrates a chromatography system for chromatographically analyzing a test sample, in accordance with one embodiment.
Figures 5A-C depicts graphs of the intensity, waveform, and duty cycle of an example plasma generating signal, plotted as functions of time.
Figure 6 illustrates an example of artefact-compensated chromatograms, and more specifically a correction for a baseline drift.
Figure 7 illustrates an example of artefact-compensated chromatograms, and more specifically a correction for a peak tailing
Figure 8 shows a comparison between a response factor of a detector operated at constant power and a response factor of a detector for which the response factor has been adjusted.
Figure 9 illustrates a comparison of power inputted for a detector operated at constant power and for a detector for which the response factor has been adjusted.
Figure 10 illustrates a chromatography system, in accordance with one embodiment.
Figure 11 illustrates the relation between the burst duty cycle and the plasma emission intensity.
Figure 12 illustrates the relation between the plasma generator frequency and the power consumption of the chromatography system.
Figure 13 illustrates the relation between the plasma emission intensity and the nitrogen concentration in a test sample.
Figure 14 illustrates a raw chromatogram.
Figures 15A-C illustrate steps for compensating a baseline drift with a blank run and peak tailings.
Figure 16 shows an artefact-compensated chromatogram.
Figure 17 shows an example of varying the duty cycle to correct a peak tailing.
Figure 18A-C illustrates how scaling factors may be applied to the compensation signal to compensate for expected chromatographic artefacts.
Figure 19 illustrates a flowchart of a method for chromatographically analyzing a test sample.
Figure 20 illustrates a flowchart of a method for chromatographically analyzing a test sample.

### DETAILED DESCRIPTION

In the present description, similar features in the drawings have been given similar reference numerals. To avoid cluttering certain figures, some elements may not be indicated if they were already identified in a preceding figure. It is appreciated that the elements of the drawings are not necessarily depicted to scale, since emphasis is placed on clearly illustrating the structure and operation of the present embodiments. Furthermore, positional descriptors indicating the location and/or orientation of one element with respect to another element are used herein for ease and clarity of description. Unless otherwise indicated, these positional descriptors should be taken in the context of the figures and should not be considered limiting. It will be understood that such spatially relative terms are intended to encompass different orientations in the use or operation of the present embodiments, in addition to the orientations exemplified in the figures.

In the present description, the terms "a", "an", and "one" are defined to mean "at least one", that is, these terms do not exclude a plural number of elements, unless stated otherwise.

Terms such as "substantially", "generally", and "about", that modify a value, condition, or characteristic of a feature of an exemplary embodiment, should be understood to mean that the value, condition, or characteristic is defined within tolerances that are acceptable for the proper operation of this exemplary embodiment for its intended application or that fall within an acceptable range of experimental error. In particular, the term "about" generally refers to a range of numbers that one skilled in the art would consider equivalent to the stated value (e.g., having the same or equivalent function or result). In some instances, the term "about" means a variation of ±10 percent of the stated value. It is noted that all numeric values used herein are assumed to be modified by the term "about", unless stated otherwise.

The terms "match", "matching", and "matched" are intended to refer to a condition in which two elements are either the same or within some predetermined tolerance of each other. That is, these terms are meant to encompass not only "exactly" or "identically" matching the two elements but also "substantially", "approximately" or "subjectively" matching the two elements, as well as providing a higher or best match among a plurality of matching possibilities.

Unless stated otherwise, the terms "connected", "coupled", and derivatives and variants thereof, refer to any connection or coupling, either direct or indirect, between two or more elements. The connection or coupling between the elements may be, for example, mechanical, optical, electrical, thermal, chemical, fluidic, magnetic, logical, operational, or any combination thereof.

**In** the present description, the term "concurrently" refers to two processes that occur during coincident or overlapping time periods. The term "concurrently" does not necessarily imply complete synchronicity and encompasses various scenarios including time -coincident or simultaneous occurrence of two processes; occurrence of a first process that both begins and ends during the duration of a second process; and occurrence of a first process that begins during the duration of a second process but ends after the completion of the second process.

**In** the present description, the terms "light" and "optical", and variants and derivatives thereof, are intended to refer to radiation in any appropriate region of the electromagnetic spectrum. These terms are not limited to visible light but also include invisible regions of the electromagnetic spectrum, for example, the ultraviolet region and the infrared region.

**In** the present description, the terms "gas sample", "sample", synonyms and derivatives thereof are intended to refer to any gaseous substance known, expected, or suspected to contain analytes. Gas samples can be broadly classified as organic, inorganic, or biological. Gas samples can include a mixture of analytes and non-analytes. The term "analyte" is intended to refer to any component of interest in a gas sample that can be detected according to the present techniques, while the term "non-analyte" is intended to refer to any sample component for which detection is not of interest in a given application. Non-limiting examples of non-analytes include, to name a few, water, oils, solvents, and other media in which analytes may be found, as well as impurities and contaminants. It is appreciated that in some instances, terms such as "component", "compound", "constituent", and "species" may be used interchangeably with the term "analyte". In some implementations, the analytes of interest may include volatile organic compounds (VOCs). VOCs are organic chemicals that readily produce vapors at ambient temperatures and are therefore emitted as gases from certain solids or liquids. VOCs include both human-made and naturally occurring chemical compounds. Non-limiting examples of VOCs include, to name a few, aromatics, alkenes, bromides and iodides, sulfides and mercaptans, organic amines, ketones, ethers, esters and acrylates, alcohols, aldehydes, and alkanes, and alkyl halides. It is appreciated, however, that the present technique may also be used to detect certain volatile inorganic compounds and semi-volatile organic compounds.

The present techniques may be used or implemented in various fields that may benefit from obtaining a chromatogram having no or few artefacts. Non-limiting examples include, to name a few, medical, including exhaled breath analysis; pharmaceutical; food analysis; environmental; petrochemical; toxicology; forensic; industrial hygiene; chemical process control; hazardous waste monitoring; soil remediation; indoor air quality testing; and gas leak detection.

Various embodiments disclosed herein may be used in gas chromatography (GC) applications. In the present description, the term "gas chromatography" refers to an analytical or process technique for separating a gas sample or mixture into its individual components and for analyzing qualitatively and quantitatively the separated sample components. In most GC applications, the sample is transported in a carrier gas to form a mobile phase. The mobile phase is then carried through a stationary phase, which is located in a column or another separation device. The mobile and stationary phases are selected so that the components of the gas sample transported in the mobile phase exhibit different interaction strengths with the stationary phase. This leads to different sample components having different retention times through the system, where the sample components that are strongly interacting with the stationary phase move more slowly with the flow of the mobile phase and elute from the column later than the sample components that are weakly interacting with the stationary phase. As the sample components separate, they elute from the column and enter a detector. The detector is configured to generate an electrical signal whenever the presence of a sample component is detected. The magnitude of the signal is proportional to the concentration level of the detected component. The measurement data can be processed by a computer to obtain a chromatogram, which is a time series of peaks representing the sample components as they elute from the column. The retention time of each peak is indicative of the composition of the corresponding eluting component, while the peak height or area conveys information of the amount or concentration of the eluting component. It is appreciated, however, that various other embodiments disclosed herein may be used in technical fields other than GC. Non-limiting examples of such technical fields include, to name a few, gas purification systems, gas leak detection systems, and online gas analyzers without chromatographic separation.

The present description broadly relates to techniques for chromatographically analyzing a test sample . Depending on the application, the techniques disclosed herein may be adapted for use in a laboratory setting, such as with high-performance GC applications, or in the field. The systems implementing the disclosed techniques may be fixed, portable, or handheld instruments, and may be externally powered or battery powered.

### System for chromatographically analyzing a test sample

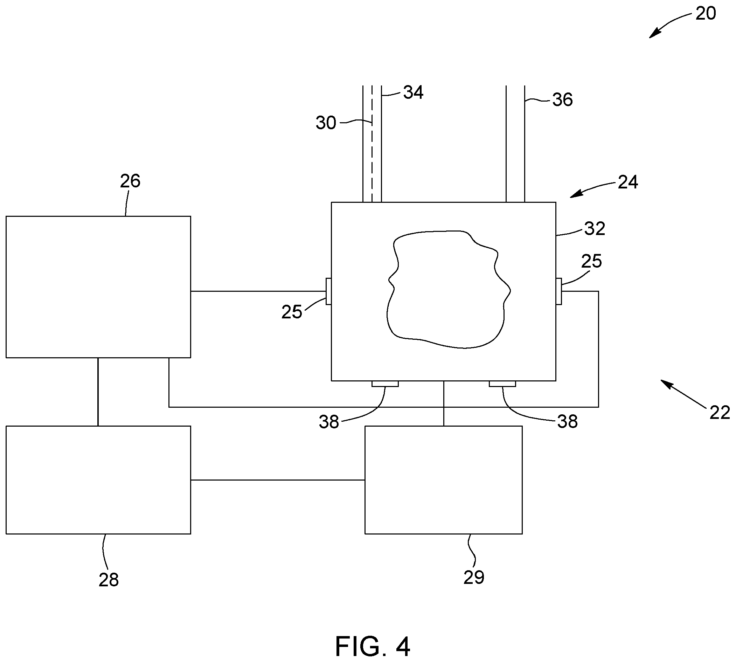

In accordance with one broad aspect, there is provided a chromatography system 20 for chromatographically analyzing a test sample 30. Figure 4 illustrates a schematic representation of an embodiment of such a chromatography system 20. The system 20 generally includes a detector 22 and a control and processing unit 28 connected to the detector 22 to control its operation and receive therefrom detection data (sometimes referred to as "detection signal(s)"). In the illustrated embodiment, the detector 22 broadly includes a reaction chamber 24, at least one pair of electrodes 25 connected to the chamber 24, a generator circuit 26 (sometimes refer to a "plasma generator", a "plasma-generating circuit" or a "plasmagenerating mechanism") connected to the electrodes 25, and an optical detection module 29 optically coupled to the chamber 24. In some embodiments, the optical detection module 29 may include one or more photodiodes, or any other device(s) and/or apparatuses configured to convert light into an electrical current. Of course, one skilled in the art will appreciate that additional components or features that may be useful or necessary for the practical operation of the detector 22 may not be specifically depicted in Figure 4. Non-limiting examples of such additional features and components may include vacuum lines, pressure and flow regulators, electrical connections, and other standard hardware and equipment. The detector 22 may be operated according to different detection schemes, and may be embodied, for example and without being limitative, by any one of traditional detectors generally used in chromatography, such as plasma-based detector, Photoionization Detector (PID), Flame Ionization Detectors (FID), Electron Capture Detectors (ECD), Thermal Conductivity Detectors (TCD), Photoionization Detectors (PID) and Mass spectrometers (MS), or the like. According to the invention, the detector is a plasma-based detector.

The test sample 30 being analyzed may include any gaseous substance - including gases, vaporized liquids, and vaporized solids - known, expected, or suspected to contain analytes that may be detected using the present techniques. For example, the test sample 30 may include a mixture of analytes flowing in a carrier gas. Non-limiting examples of carrier gases include, to name a few, helium, nitrogen, argon, air, oxygen, and hydrogen. In some implementations, the test sample 30 may originate from a GC column (not shown). In this case, the test sample 30 may be a stream of analytes entrained in a carrier gas flow, where different analytes elute from the GC column and reach the detector 22 at different times. The detector 22 may sequentially detect the different analytes and may output electrical signals representing analyte measurements. The electrical signals may be processed to produce a chromatogram. However, as noted above, the detector 22 may be used to analyze test samples in various applications other than GC.

The chamber 24 is configured to receive the test sample 30 to be analyzed. The chamber 24 may include a chamber body 32, a sample inlet 34 for receiving the test sample 30 into the chamber body 32, and a sample outlet 36 for discharging the test sample 30 from the chamber body 32. For example, in GC applications, the sample inlet 34 may receive the test sample 30 from a GC column or an upstream GC detector, while the sample outlet 36 may discharge the test sample 30 to a downstream GC detector, other downstream equipment, or to the atmosphere.

In some embodiments, the detector 22 may be a plasma-based optical emission detector or may include at least one plasma-based optical emission detector. In the illustrated embodiments, the chamber body 32 encloses an interior volume defining a discharge region adapted to receive the test sample 30. The chamber body 32 may be provided with one of more windows 38 to allow optical radiation emitted within the interior volume to be detected by the optical detection module 29 located outside of the discharge chamber 24. It is appreciated that the theory, configuration, instrumentation, and operation of plasma-based optical emission detectors are generally known in the art and need not be described in detail herein other than to facilitate an understanding of the present techniques. Reference is made in this regard to international patent application PCT/CA2016/050221 (published as WO 2016/141463).

It is appreciated that various methods are available for exciting the test sample 30 inside the chamber body 32 and generate a gas discharge plasma from which optical radiation is emitted. Non-limiting examples of excitation methods include, for example and without being limitative, a continuous direct current (DC) discharge, a pulsed DC discharge, an alternating current (AC) discharge, a dielectric barrier discharge (DBD), a corona discharge, a radio frequency (RF) discharge, a microwave (MW) discharge, a hollow cathode (HC) discharge, an inductive coupled plasma (ICP) discharge, and a capacitively coupled plasma (CCP) discharge. It is appreciated that the implementation of such excitation methods is generally known in the art and need not be described in detail herein.

The detector 22 is equipped with at least one pair of discharge electrodes 25 disposed in a spaced apart, and preferably parallel configuration. The discharge electrodes 25 define a discharge gap therebetween in the discharge region. The discharge electrodes 25 may be made of any suitable electrically conducting material, such as various metals, metal alloys, and semiconducting materials. It is appreciated that the number, size, shape, composition, structure, and arrangement of the discharge electrodes 25 may be varied depending on the application.

The generator circuit 26 (sometimes refer to a "plasma generator", a "plasma-generating circuit" or a "plasma-generating mechanism", as indicated above) is operatively connected to the discharge electrodes 25 and is configured for applying an electric drive signal to the discharge electrodes 25 to produce a discharge electric field suitable for generating, from the test sample 30, a gas discharge plasma emitting radiation in the discharge region and for maintaining the plasma in a stable state for any desired period of time or interval. In the illustrated embodiment, the discharge electric field is substantially perpendicular to a surface normal to the window 38, although other embodiments may use different field configurations. It is to be noted that the electrodes 25 may be operatively connected to a power supply that may be voltage- controlled or current-controlled. In some embodiments, the power supply may include an adjustable switching power supply in a series configuration with an adjustable linear power supply. The electric drive signal may be a periodic time-varying voltage or current of an appropriate waveform, such as sinusoidal, square, triangular, or sawtooth. Alternatively, pulsed DC signals may be used. In some embodiments, the electric drive signal may be a periodic time-varying voltage having a frequency ranging from about 1 kHz to about 100 kHz and a peak-to-peak magnitude ranging from about 500 V to about 10 kV, although other values may be used in other embodiments. It is appreciated that the characteristics of the electric drive signal may be selected in view of the nature of the discharge and the operating conditions of the detector 22 in order to favor breakdown of the test sample 30 and generation of a plasma. In the present description, the expression "direct current" refers to electric signals characterized by a unidirectional flow of electric charge, without change in polarity, in contrast with the expression "alternating current", which refers to electrical signals characterized by a bidirectional flow of electric charge accompanied by changes in polarity. The expression "direct current" includes both continuous and pulsed direct current. In particular, DC electrical signals may be of constant magnitude or may vary with time, either abruptly (e.g., square waveform) or gradually (e.g., ramped waveform) so that various types of DC waveforms are possible, including fully and partially rectified waveforms. However, in other embodiments, low-frequency AC signals (e.g. , in the range from about 100 Hz to about 100 kHz, although ranges could be used) may also be used for generating the discharge electric field 126.

The system 20 may further include a control and processing unit 28. The control and processing unit 28 may be configured for controlling, monitoring, and/or coordinating the functions and operations of various components of the system 20, including the detector 22. The control and processing unit 28 may also be configured for analyzing the chromatogram obtained by the detector 22 to derive information about the presence and concentration of analytes in the test sample, for example, based on calibration to known standard gases. In GC applications, the control and processing unit 28 may process (or "transform") the detection signal into a chromatogram. It is appreciated that the principles underlying the processing of chromatographic data to derive analytical information about a test sample are generally known in the art and need not be described in detail herein. The control and processing unit 28 may be implemented in hardware, software, firmware, or any combinations thereof, and be connected to various components of the detector 22 via wired and/or wireless communication links to send and/or receive various types of electrical signals, such as timing and control signals, measurement signals, and data signals. The control and processing unit 28 may be controlled by direct user input and/or by programmed instructions and may include an operating system for controlling and managing various functions of the detector or components thereof. Depending on the application, the control and processing unit 28 may be fully or partly integrated with, or physically separate from, the other hardware components of the system 20.

The control and processing unit 28 generally includes at least one processor and a memory. The processor may include or be part of a computer; a microprocessor; a microcontroller; a coprocessor; a central processing unit (CPU); an image signal processor (ISP); a digital signal processor (DSP) running on a system on a chip (SoC); a single-board computer (SBC); a dedicated graphics processing unit (GPU); a special-purpose programmable logic device embodied in hardware device, such as, for example, a field- programmable gate array (FPGA) or an application-specific integrated circuit (ASIC); a digital processor; an analog processor; a digital circuit designed to process information; an analog circuit designed to process information; a state machine; and/or other mechanisms configured to electronically process information and to operate collectively as a processor. Depending on the application, the processor may include a single processing unit or a plurality of processing units. In the latter case, the processing units may be physically located within the same device, or the processor may represent processing functionality of a plurality of devices operating in coordination. The memory, which can also be referred to as a computer readable storage medium, can store computer programs and other data to be retrieved by the processor. In the present description, the terms "computer readable storage medium" and "computer readable memory" are intended to refer to a non-transitory and tangible computer product that can store and communicate executable instructions for the implementation of various steps of the methods disclosed herein. The computer readable memory can be any computer data storage device or assembly of such devices, including random-access memories (RAMs); dynamic RAMs; read-only memories (ROMs); magnetic storage devices, such as hard disk drives, solid state drives, floppy disks, and magnetic tapes; optical storage devices, such as compact discs (e.g., CDs and CDROMs), digital video discs (DVDs), and Blu-Ray^{™} discs; flash drive memories; and/or other non-transitory memory technologies. A plurality of such storage devices may be provided, as would be appreciated by one skilled in the art. The computer readable memory may be associated with, coupled to, or included in a computer or processor configured to execute instructions contained in a computer program stored in the computer readable memory and relating to various functions associated with the computer or processor.

Of note, the control and processing unit 28 may be configured to execute one or more steps of a method for chromatographically analyzing the test sample. Different embodiments of such a method will now be presented.

### Method for chromatographically analyzing a test sample

In accordance with another broad aspect, there is provided a method for chromatographically analyzing a test sample. The method that will be herein described generally includes compensating a chromatogram during its acquisition, in order to limit, reduce, suppress or at least mitigate the effects of chromatographic artefacts that may be observed during the characterization of the test sample. Such chromatographic artefacts are known to distort the general shape or profde of the chromatograms, for example by affecting the baseline and/or the peak shape. These distortions in the chromatograms may complicate or generally negatively impact the interpretation of the acquired chromatograms, therefore affecting the quality of the measurements obtained by the detector. It is therefore one of the aims of the disclosed methods to produce chromatograms that are substantially free of, or have reduced, chromatographic artefacts.

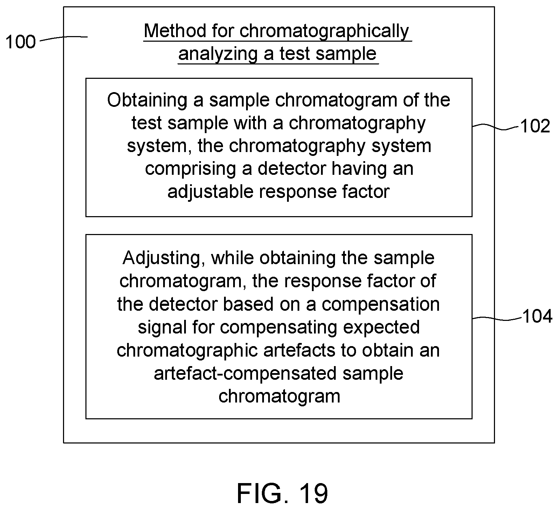

Figure 19 illustrates a flowchart of a method 100 for chromatographically analyzing a test sample. The method 100 includes a step 102 of obtaining an artefact-compensated sample chromatogram of the test sample. The artefact-compensated sample chromatogram may be obtained with a chromatography system including a detector having an adjustable response factor. The system may be similar to the one having been previously described. The method 100 also includes a step 104 of adjusting the response factor of the detector while obtaining the sample chromatogram. The step 104 of adjusting the response factor of the detector is based on a compensation signal, which allows compensating for chromatographic artefacts that would otherwise be present in the sample chromatogram. As it has been previously mentioned, the chromatographic artefacts include, but are not limited to baseline drift and/or peak tailing.

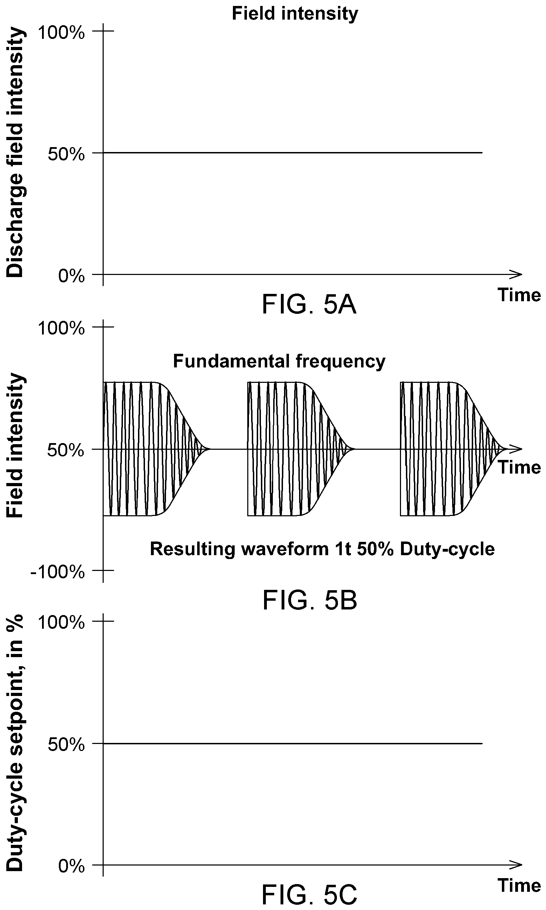

It will be noted that the expression "adjusting the response factor" may include or refer to one or more sub-steps. In some implementations, adjusting the response factor of the detector may include, in the case of a plasma-based optical emission detector, a step of adjusting the energy delivered to a plasma cell. Adjusting the energy delivered to the plasma cell may include adjusting a plasma generating field or signal. The plasma generating signal may be adjusted by varying an intensity of the signal, a frequency of the signal, a duty of the cycle, or any combination thereof. Figure 5 depicts graphs of the intensity, waveform, and duty cycle of an example plasma generating signal, plotted as functions of time. Of note, in some applications, controlling the intensity of the plasma-generating field alone may not be sufficient, mostly because, below a certain intensity, the emission will simply stop. In the context of the current disclosure, 0% of the plasma-generating field intensity substantially corresponds in fact to a field intensity value just over the plasma extinction point. Changing the duty cycle allows changing the percentage of one period of the plasma-generating signal during which the signal is active. Of note, if the duty cycle is set below a certain value, it may affect the impedance matching between the components of the system, and the power consumption may increase and become unstable. One skilled in the art would appreciate that this lower duty cycle value is dependent of the cell impedance which may include electrodes size, inter-electrodes distance and the number of cells being driven by the plasma generator. Generating short pulses or bursts allows introducing several high frequency harmonics in the system, which changes the phase between the voltage and the current at the outlet of the plasma generator. When there is more power or energy provided to the plasma, there are more excited molecules and more emission, thereby resulting in a higher response factor. This applies for some wavelength emission bands, or the overall plasma emission spectral profde.

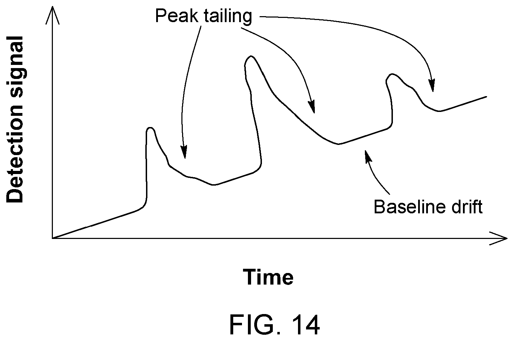

In some embodiments, the method may include obtaining a raw or control chromatogram representative of a control sample with the detector, prior to obtaining the artefact-compensated sample chromatogram. A nonlimitative example of a raw chromatogram is illustrated in Figure 14. As illustrated, the raw chromatogram exhibits chromatographic artefacts, namely a baseline drift and peak tailing. In these embodiments, the control sample is representative of the test sample whose chromatogram is to be artefact- compensated. In some embodiments, the control sample may include a predetermined concentration of gaseous species. In some implementations, the predetermined concentration of the gaseous species may be known a priori, for example, if the control sample has a calibrated or standard concentration that does not require to be measured. Once the raw chromatogram has been obtained, the method may include a step of characterizing one or more properties of the chromatographic artefacts of the raw chromatogram. These properties may be stored on the control and processing unit 28 (or a component thereof).

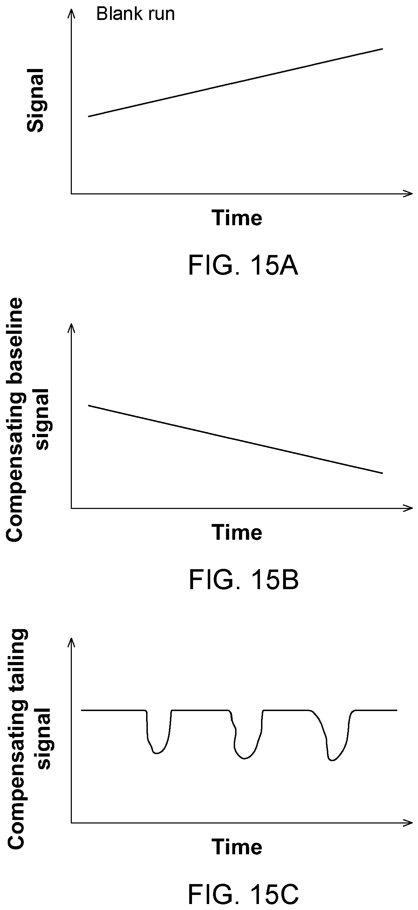

Once the raw chromatogram has been obtained, the compensation signal may be determined. The determination of the compensation signal is based on the characterization of the artefacts found in the raw chromatogram. In applications where the baseline drift is corrected, determining the compensation signal may include determining a baseline drift associated with the raw chromatogram, for example, by, determining deviations of the baseline of the raw chromatogram from a reference line (e.g., a horizontal line) over time. The effects of the baseline drift may be compensated with a baseline compensation signal component of the compensation signal. In some embodiments, the baseline compensation signal may be obtained by inverting the baseline drift associated with the raw chromatogram. In some embodiments, the baseline compensation signal may be obtained with a blank run, as illustrated in Figure 15A. In this example, the baseline drift is linear but other forms of baseline drifts may be compensated in other embodiments. Because the baseline drift is linear, the compensated baseline signal is also linear. More specifically, and now referring to Figures 15A and 15B, the magnitude of the slopes of the baseline drift and the baseline compensation signal may be the same, but the signs of their slopes may be opposite (positive for one, and negative for the other).

In applications where peak tailing is corrected, determining the compensation signal may include determining peak tailing parameters associated with the raw chromatogram. As it has been previously mentioned, peak tailing may occur when tailing end of an elution peak is distorted, such that the overall peak shape deviates or differs from its ideal or expected (e.g. , Gaussian) shape, and is as a result asymmetric. Peak tailing may be compensated with a peak tailing compensation signal component of the compensation signal. An example of a peak tailing compensation signal is illustrated in Figure 15C. It is appreciated that the illustrated peak tailing compensation signal as a function of time exhibits dips in magnitude at times corresponding to the tailing ends of the associated peaks. These dips in magnitude in the peak tailing compensation signal are intended to make expected tailing peaks in the sample chromatogram fall more rapidly when the compensation signal is applied to the response factor of the detector while the detector acquires the sample chromatogram. In some embodiments, the peak tailing compensation signal may be obtained after the determination of the baseline drift of the raw chromatogram. For example, the raw chromatogram may be corrected for baseline drift artefacts, and then the peak tailing of one or more elution peaks found in the raw chromatogram may be characterized. The ideal Gaussian shape (or at least symmetrical shape) of a given elution peak may be evaluated or determined by characterizing the shape of a first half of the given elution peak (sometimes referred to as a "peak front", i. e. , the portion of the elution before an ton point) and exploiting symmetry to determine, model or predict a second half of the elution peak (sometimes referred to as a "peak tail", i.e., the portion of the elution after the inflection point). It will be noted that other corrections may be applied to each elution peak, such as a scaling factor or similar techniques. Once the ideal Gaussian shape of the or each elution peak has been determined, it is then possible to determine the differences between the ideal or expected Gaussian shape of each elution peak and the elution peak having been measured. It is in turn possible to determine the tailing compensation signal to be applied during the acquisition of the sample chromatogram to compensate for peak tailing artefacts that would otherwise affect the sample chromatogram. It is to be noted that the "overall" or "global" compensation signal may be obtained or determined by combining the baseline compensation signal with the peak tailing compensation signal.

Once the compensation signal has been determined, it can be stored in memory and used at a later time to reduce or correct chromatographic artefacts that would otherwise affect the chromatogram of a test sample, as the sample chromatogram is measured by the detector. Specifically, the compensation signal stored in memory is retrieved and used to adjust, in real-time or near real-time, the response factor of the detector, so as to obtain an artefact-compensated sample chromatogram. The artefact-compensated sample chromatogram may be obtained after circulating a gas stream containing the gas sample to be characterized through the detector. As it will be appreciated by the person skilled in the art, the gas sample generally includes an unknown concentration of one or more gaseous species to be measured. It will be noted that the gaseous species in the gas sample may be the same as the ones included the control sample.

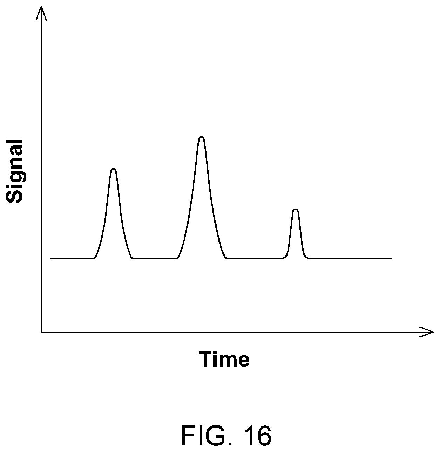

Having determined the compensation signal, the detector can be operated based on the compensation signal. More particularly, the compensation signal is representative of how the detector may be operated, driven or controlled over time to compensate for the chromatographic artefacts (e.g., baseline drift and/or peak tailing) that would otherwise be expected to be observed in the sample chromatogram, and obtain the compensated sample chromatogram, i.e., a chromatogram having no, negligible, or otherwise reduced chromatographic artefacts. An example of an artefact-compensated chromatogram, in which baseline drift and peak tailing have been compensated for, is illustrated in Figure 16.

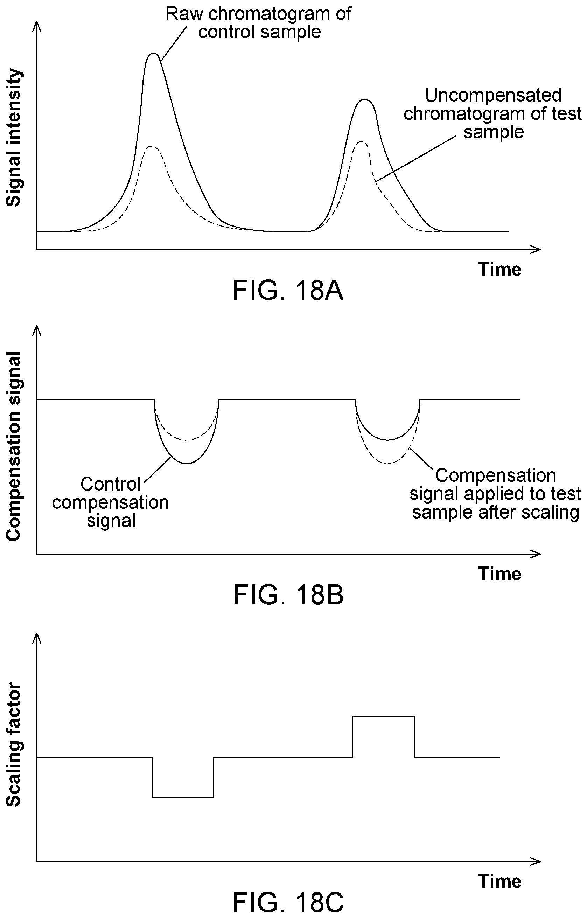

It is appreciated that a compensation signal derived from calibration data is representative of the control sample used to obtain it. The control sample may be representative of, but not identical to, the test sample . For example, the control sample and the test sample may include tailing peaks at the same, or nearly the same, elution times. However, the amplitude of these peaks will generally differ (see Figure 18A). This is because the control sample and the test sample may contain different concentrations of the same analytes, resulting in corresponding peaks having different amplitudes in the raw and sample chromatograms. This means that the compensation signal that is actually applied to the response factor of the detector during the acquisition of the chromatogram of the test sample may be based on (i) the shape or waveform in the time domain of the compensation signal obtained with the control sample and (ii) a time-dependent scaling factor applied to the waveform of the control compensation signal to account for peak intensity variations (see Figures 18B and 18C, where the scaling factor applied to the compensation signal associated with the left peak is less than one and the scaling factor applied to the compensation signal association with the right peak is greater than one). It is appreciated that while the waveform of the compensation signal associated with the control sample may be obtained by prior calibration, the scaling factor to be applied to correct for the tailing of a particular peak may be determined during the acquisition of the sample chromatogram. For example, the scaling factor of a given peak may be obtained by comparing the peak maximum in the control chromatogram with the peak maximum measured in the sample chromatogram. In such a case, the scaling factor is determined nearly immediately before it is applied to adjust the response factor. This is because peak tailing can start to occur nearly immediately after the peak maximum where the scaling factor is evaluated. In other embodiments, some characteristics of an elution peak may be expected such as, for example, the intensity of the peak. More specifically, it may be expected that a specific elution peak has an expected intensity corresponding to an expected concentration. For instance, it may be expected that a predetermined concentration of a species reaches a certain level. For example, it may be expected that an elution peak reaches a certain ppm value, e.g., 10 ppm. However, during the generation of the chromatogram, it is possible that the elution peak reaches a value different than the expected value. For example, the value may be greater, e.g., 20 ppm, or, alternatively, smaller than the expected value, e.g., 5 ppm. In the first case, a scaling factor of 0.5 may be applied to the compensation signal associated with that peak. Similarly, in the second case, a scaling factor of 2 may be applied to the compensation signal. As such, in addition to the artefact compensation, the compensation signal may also be adjusted or normalized by a scaling factor.

The chromatographic artefacts may be corrected in real time ( .e., as the sample chromatogram is measured), near real time or after the measurement of the sample chromatogram.

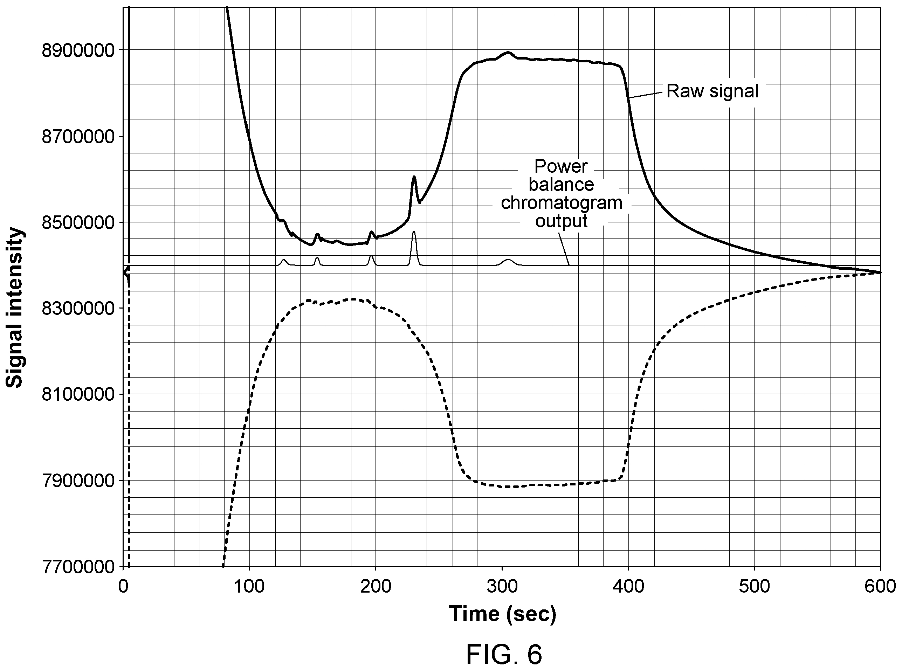

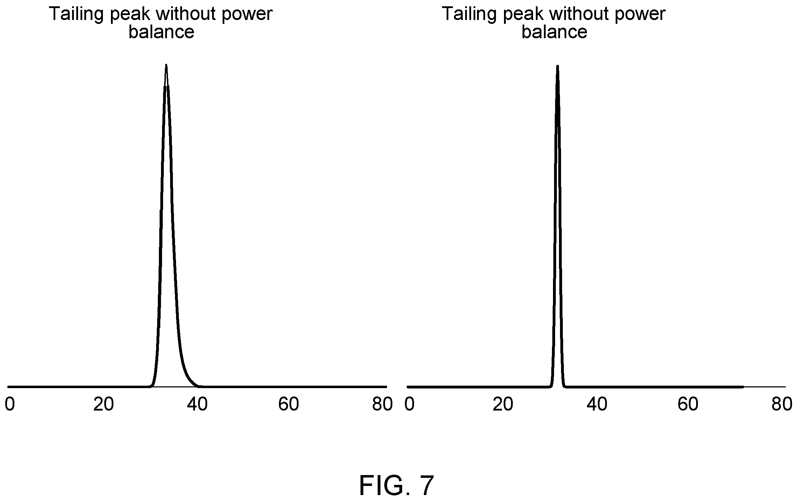

Figures 6 and 7 illustrate nonlimitative examples of artefact-compensated chromatograms. Figure 6 illustrates a correction for a baseline drift. Figure 7 shows a correction for peak tailing. As previously mentioned, in some embodiments, a chromatogram may be simultaneously corrected for a baseline drift and a peak tailing.

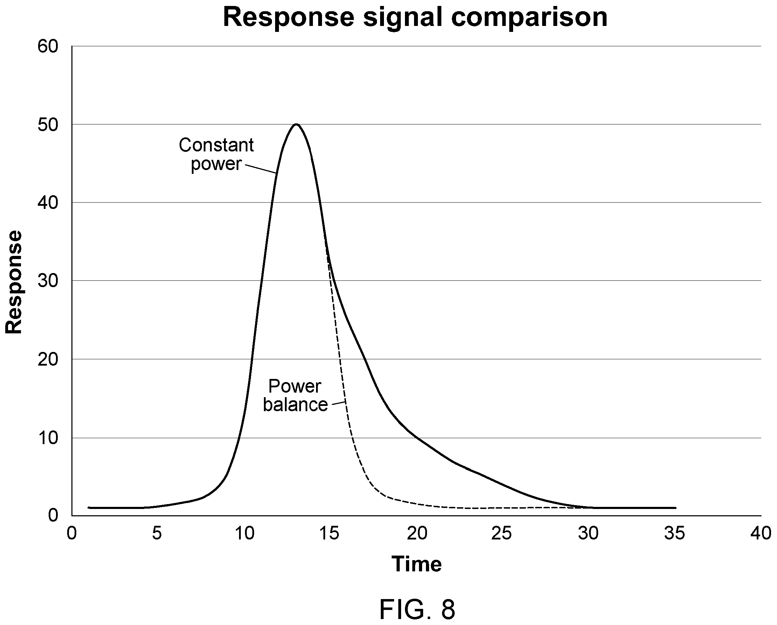

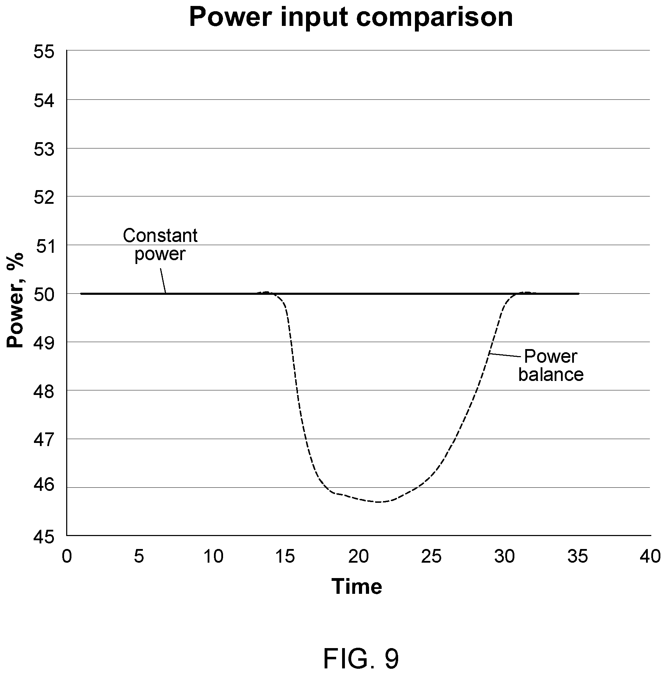

**In** Figure 8, there is illustrated a comparison between a response signal (or factor) of a detector operated at constant power ( .e., the response factor has not been adjusted) and a power balanced response signal obtained with a detector for which the response factor has been adjusted or balanced according to the techniques herein described. Figure 9 illustrates a comparison of the plasma cell power inputted for the detector operated at constant power (the flat line labelled "constant power") and the detector for which the response factor has been adjusted (the other line labelled "power balance").

**In** some embodiments, the expected chromatographic artefacts are real-time expected chromatographic defects, meaning that the response factor may be adjusted in real-time or near real-time, upon detection of the chromatographic defects.

**In** other embodiments, the expected chromatographic artefacts are based on calibration data. The calibration data may include a mapping between a plurality of expected chromatographic defects and corresponding properties. Such properties include but are not limited to the expected elution time of the chromatographic defects and information about the impact that would have such an expected chromatographic defect. The calibration data could also include information about the ideal shape of one or more peaks of the chromatogram, for example in terms of their intensity, broadness and/or symmetry. As such, the calibration data can be used to either automatically or manually indicate if the chromatogram includes one or more peaks having properties that depart from their ideal characteristics, and then activate the compensation sequence of the chromatogram and subsequently adjust the response factor of the detector.

In some embodiments, the method may include displaying the artefact-compensated sample chromatogram as it is obtained. In other embodiments, the method may include preliminary displaying a chromatogram presenting at least one chromatographic artefact, which would correspond to a scenario wherein the test sample is characterized, but without adjusting the response factor to compensate the expected chromatographic artefacts. Such a step may be useful to determine which chromatographic defects are present in a given sample, which may facilitate or at least help in determining the compensation signal that would need to be generated to correct these chromatographic defects. In some embodiments, the method may include a step of superimposing the artefact-compensated sample chromatogram and the sample chromatogram before its compensation. An illustration of the differences between the artefact-compensated sample chromatogram and the sample chromatogram before its compensation may be informative of the sample under study but may also provide information on the chromatography system being used, which may also be useful to identify potential problems in the chromatography system or at least one of its components thereof. It will be noted that the artefact-compensated sample chromatogram and the sample chromatogram before its compensation are not necessarily displayed, and that the data associated with the sample chromatograms may be digitized and exported towards the control and processing unit for subsequent processing and/or storage.

**In** some embodiments, the method may further include a step of pre-processing the artefact-compensated chromatogram. Such a step of pre-processing the artefact-compensated chromatogram may include fdtering, adjusting, correcting one or more of the peaks of the artefact-compensated chromatogram, or at least a portion thereof. Such a pre-processing step may be useful to mitigate the effect that some of the components may have on the overall quality of the artefact-compensated chromatogram. For example, the pre-processing step may be useful to remove shot noise, electronics noise and/or optical noise that are typically present in chromatography systems. Some pre-processing techniques are already known in the art and will therefore not be described in detail herein.

Once the artefact-compensated chromatogram has been obtained, and after the optional step of preprocessing, the method may include a step of processing the artefact-compensated chromatogram. Processing the artefact-compensated chromatogram allows determining the properties of the test sample. Of note, processing the artefact-compensated chromatogram may include performing different mathematical operations (e.g., additions, subtractions, ratio calculations, Fourier transforms, filtering, averaging, or any other mathematical functions) on the artefact-compensated chromatogram or at least one peak thereof.

**In** some embodiments, the method may be well adapted for implementations with plasma-based detectors. In these embodiments, the method may include a general step of circulating the test sample in a plasma chamber of the detector. In one implementation, the test sample may be provided as a gas stream. The step of circulating the test sample is followed by a step of generating a plasma in the test sample, e.g., in the gas stream circulating in the plasma chamber of the detector. Some aspects of the generation of a plasma have been previously described, and other aspects of the generation of a plasma are known in the art and will therefore not be described in greater detail. The method may also include a step of measuring an optical emission of the plasma. The optical emission is representative of the test sample and the constituents thereof. It will be noted that, in some embodiments, the optical emission may be embodied by a spectral line representative of an analyte of interest that is present in the test sample. In some embodiments, measuring the optical emission of the plasma may include obtaining a reference signal, obtaining an emission signal, and subtracting the reference signal from the emission signal.

### Example of an implementation

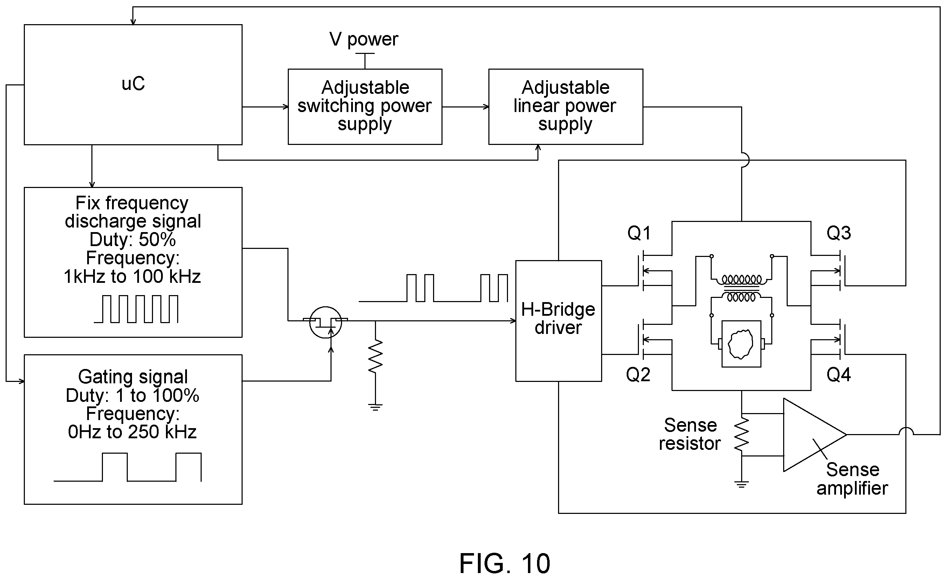

Now turning to Figures 10 to 16, an example of an implementation will now be described. In Figure 10, a nonlimitative embodiment of a detector is illustrated. The chromatography system illustrated in Figure 10 notably includes the components having been previously described.

Broadly described, this example relates to techniques for modulating the energy (or power) delivered to a plasma discharge and tuning the same to adjust a response factor of a plasma-based detector in real time. Such techniques may be used for continuously monitoring a chromatography sample. It will be noted that these techniques may be applied to one or more emission bands, spectral windows and/or wavelengths. For example, in the embodiments relying on a plasma detector, the emission bands may be comprised in a wavelength range extending from about 200 nm to about 1100 nm. Of course, any other spectral ranges or wavelengths could be investigated, depending on the targeted application. Nonlimitative example of applications include online continuous flow analyzers and detection techniques that are generally used in chromatographic systems or methods. As it will be explained in greater detail below, different types of detectors may benefit from the example that will now be described. Of note, adjusting the energy delivered to the plasma discharge allows eliminating chromatography artefacts with relatively great accuracy and repeatability.

In the implementation illustrated in Figure 10, the system includes a plasma generator. The plasma generator is an electrical circuit to which a plasma cell is connected. The plasma cell is the component of the system in which the plasma discharge is generated. Of note, the system can include one or more plasma cells. Each cell is generally equipped with at least two electrodes, the electrodes being similar to the ones having been previously described. In some instances, the system may include one plasma cell with two electrodes. In other instances, the system may include one plasma cell equipped with four electrodes. In yet other instance, the system may include two plasma cells, each being provided with two electrodes. It will be noted that in the embodiments wherein one plasma cell is equipped with four electrodes, the four electrodes may be arranged in two sets of two electrodes connected in parallel. The first set of electrodes generally has a first impedance, and the second set of electrodes generally has a second impedance. The first impedance and the second impedance are collectively associated with a global electrode impedance. In some embodiments, the first impedance of the first set of electrodes could be substantially matched to the impedance of the second set of electrodes. In other embodiments, the first impedance and the second impedance may be different one from another. The global electrode impedance (i.e., the combination of the first and second impedances) is substantially matched with the impedance of the plasma generator. Matching the impedance of the global electrode impedance with the impedance of the plasma generator helps reducing or avoiding heat generation or other thermal issues in the electronic, mechanical and/or optical components of the system. One would note that unmatched impedance in the system may result in a less efficient power or energy consumption, meaning that the system would consume more energy than required for its operation. Impedance matching may also help in generating a more stable discharge. A stable discharge generally has more constant properties, which generally facilitate its characterization. Matching the impedance in the chromatography system may be done according to the following steps. It will be noted that such steps may globally be referred to as "adjusting the response factor of a detector". More specifically, the energy supplied to the plasma discharge (e.g., a carrier gas) is related to the detector response factor. As it will be explained in greater detail below, the energy may itself be related to the intensity of the plasmagenerating field, the fundamental frequency of the plasma-generating field, and the burst duty cycle. The embodiments that will be described may be useful in contexts wherein it may be desirable to prevent or at least minimize the instances in which the detector is saturated.

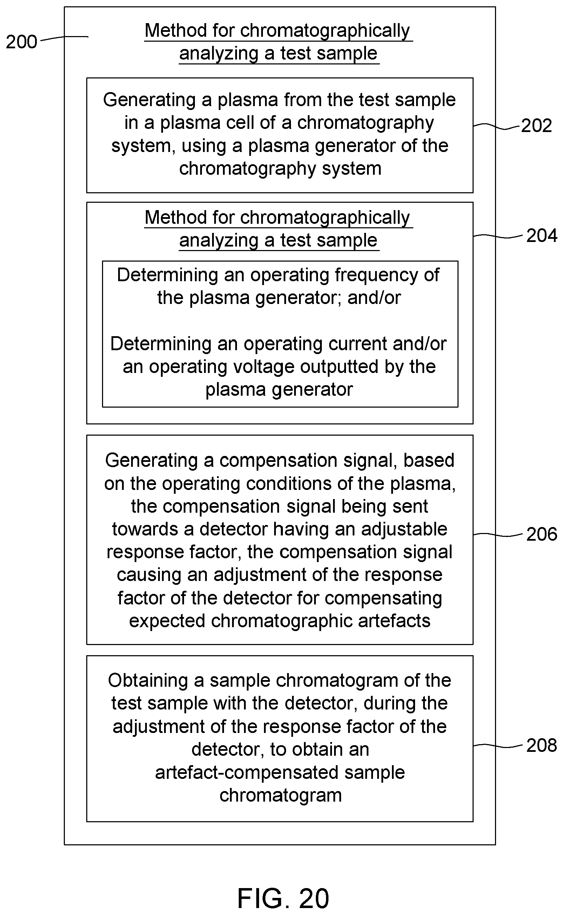

Figure 20 illustrates a flowchart of a method 200 for chromatographically analyzing a test sample. The method 200 may include a step 202 of generating a plasma from a test sample in the plasma cell. As noted above, the test sample is the sample whose chromatogram is to be artefact-compensated via real-time response-factor adjustments. Such a step typically includes ramping a voltage applied across the discharge electrodes until the voltage reaches a breakdown voltage, which generates the plasma in the plasma cell. The plasma produces light that is collected by the detector and subsequently processed.

The method 202 according to this example includes a step 204 of determining the operating conditions of the sample, which may include selecting an operating frequency of the plasma cell and determining the characteristics of the signal that will be used to drive the plasma cell. Determining the characteristics of the drive signal generally includes determining the compensation signal as well. The operating frequency is selected among a plurality of frequencies based on the power or energy consumption of the system. More specifically, the operating frequency is selected such that the power or energy consumption of the system is minimal or close to a minimum. Of note, the minimum may be a local or relative minimum, or an absolute minimum. The operating frequency is also selected based on the intensity of the plasma discharge. More particularly, the operating frequency is selected such that the intensity of the discharge is maximal or close to a maximum. The maximum may be a local or relative maximum or a global maximum. In some embodiments, the intensity of the discharge may be detected by a photodetector configured to measure an illumination power. In some embodiments, a step of sweeping the frequencies generated by the plasma generator may be carried out to determine the operating frequency. As such, the operating frequency may be empirically determined. Alternatively, the operating frequency could be analytically determined or be determined based on a model. Yet alternatively, the operating frequency can be based on calibration data. Of note, the operating frequency is generally a fundamental frequency, but could alternatively be a harmonic (e.g., first or second harmonics). Of note, the discharge is generally greater at the fundamental frequency than at the harmonics.

Once the operating frequency has been determined, other operating conditions may be determined. For instance, the other operating conditions may include the current and/or voltage outputted by the plasma generator. For example, the method may include determining the current and/or voltage to be applied by the plasma generator. The voltage or associated current is generally selected to correspond to a fraction of the maximal power or energy that can be reached by the system, in order to avoid situations in which the plasma generator is overcharged. In some embodiments, the power is selected to be about 50% of the maximal power. The operating conditions, which include the operating frequency, as well the operating voltage and associated current allow generating a discharge having a maximal plasma emission, while minimizing the power or energy consumption by the system. The operating conditions are associated with an operating signal, which can be used to drive the plasma cell and therefore adjust the response factor of the detector. It is to be noted that the waveform of such an operating signal may be sinus, square, rectangular, or any other shapes. The operating signal may be provided in a continuous regime or in bursts or pulses. In some embodiments, the operating signal may be embodied by a compensation signal, and the method 200 may include a step 206 of generating the compensation signal, based on the operating conditions of the plasma. Once generated, the compensation signal may be sent towards the detector, which has an adjustable response factor, as it has been previously explained. The compensation signal causes an adjustment of the response factor of the detector, which allows compensating expected chromatographic artefacts. The step 206 may be followed by a step 208 of obtaining a sample chromatogram of the test sample with the detector, during the adjustment of the response factor of the detector, to obtain an artefact-compensated sample chromatogram.

Once the operating conditions have been determined, the power provided to the discharge may be adjusted. For example, the current/voltage may be increased to reach 75% or 100% of the maximal power. Alternatively, the current/voltage may be decreased to reach 25% or less of the maximal power. The power may be adjusted based on the targeted application or the sample being characterized. For example, sample containing helium may require less power, while sample including argon may require more power.

In the case of a plasma-based photodetector, it is the adjustment of the operating conditions, i. e. , the gas discharge conditions, that allows limiting, deleting or compensating for chromatographic artefacts. As it has been previously mentioned, such artefacts may include, but are not limited to baseline drift and/or peak tailings.

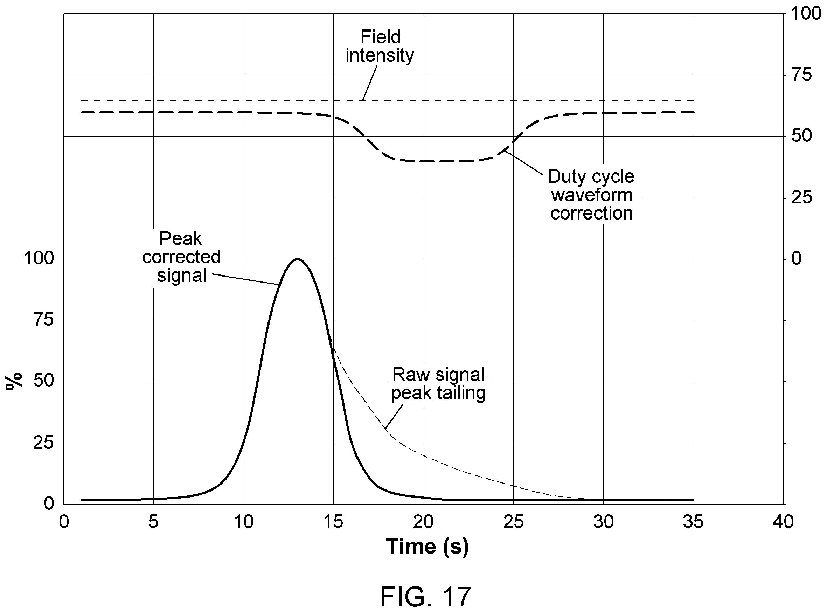

Now turning to Figure 17, an example of varying the duty cycle to correct a peak tailing is illustrated. In a first step, an oscillation frequency is chosen to minimize the power consumption by the plasma cell. This can be achieved by tuning the impedance of the plasma generator, as it has been explained above. In a second step, the field intensity may be adjusted to obtain a detection sensitivity (or a response factor) that may be dictated by the targeted application. In a third step, the response factor of the detector may be changed in real-time to correct a baseline drift, a peak tailing and/or simply to calibrate the system. Of note, the response signal may be adjusted by varying the duty cycle, as explained above. Varying the duty cycle causes various physical and chemical phenomena that may affect the ionization of impurities. Nonlimitative examples of such phenomena are the number of metastable species, the intensity of UV light, chemical reaction(s), and the like.

This example of implementation is flexible and could be adapted to a broad range of applications. For example, and without being limitative, the method may be used when measuring an analyte included in a gas (e.g., nitrogen), the analyte being carried by a carrier gas (e.g., helium). During such measurements, significant variations in the baseline signal are generally observed, and even more when the nitrogen concentration is relatively high. Significant variations in the baseline sometimes results in a substantially high baseline, i.e., having a value relatively or much higher than zero. One skilled in the art would appreciate that adjusting the operating conditions according to the methods having been insofar described allows adjusting the level of the baseline or flattening the same, as well as correcting for other chromatography artefacts.

**In** the context of this example, minimizing the power consumption of the chromatography system equates reducing or minimizing the intensity of a plasma-generating field between the electrodes. It will be noted that the scale factor or the detector sensitivity may be adjusted by adjusting or varying the plasmagenerating field intensity. In addition, for some wavelengths, adjusting the plasma-generating field intensity may affect the limit of detection of the detector. The intensity of the plasma-generating field should be high enough to maintain the plasma or emission conditions. Once the voltage of the plasma generator has been adjusted, and the method includes operating the plasma generator to produce frequency bursts or pulses. In some embodiments, the bursts or pulses are such that the duty cycle is approximately equal to 50 %. For example, if one cycle lasts about 1/200 seconds, it follows that for every 100 cycles, the bursts are generated for 50/200 seconds. These frequency bursts or pulses allow a better control of the chromatogram. For example, a baseline that would naturally drift may be adjusted to be at or close to a zero level. Again, correcting the baseline is particularly useful to avoid saturating the detector.

In some embodiments, the frequency bursts or pulses may be generated according to a pattern, e.g., pre-recorded or predetermined. In some embodiments, a burst pattern can be performed when a baseline drift is identified. The identification of the baseline drift may either be automatic or manual. As the chromatograms generally have a predetermined shape or profile, it is possible to determine deviations therefrom, and apply the appropriate corrections using the techniques having been described.

The example having been described generally allows compensating drifting baselines and improving one or more characteristics of the peaks included in the measured chromatograms. The example may also be adapted to provide signal information that may be needed to quantify the target impurities.

One skilled in the art would appreciate that this example can be generalized and adapted to other types of detection generally performed in the field of chromatography. The exemplary method having been described may be adapted for application using different detectors than a plasma-based detector, such as, for example and without being limitative, FID, ECD, TCD, FPD, DID, PID, or any other traditional detectors.

It will be noted that in gas chromatography applications, a heart cut configuration or a backflush configuration, which are two nonlimitative examples that are known by the person skilled in the art, may be used to reduce or eliminate the signal associated with the sample background. However, it remains a challenge to completely eliminate or subtract the sample background from sample signal. As a result, a baseline drift is generally observed in chromatograms, even when the heart curt or the backflush configurations are used. Such a baseline drift may be associated with improper impurities peak measurements, which may for example occur close the lower detection limit of the detector, e.g., in applications wherein concentrations smaller than a few ppm or ppb may need to be measured or monitored.

It will be noted that the example having been described allows correcting a drifting baseline that may have been caused by column bleeding or by the balance of the sample background slowly eluting from the column.

Now that the example has been described in detail, some experimental considerations will now be presented.

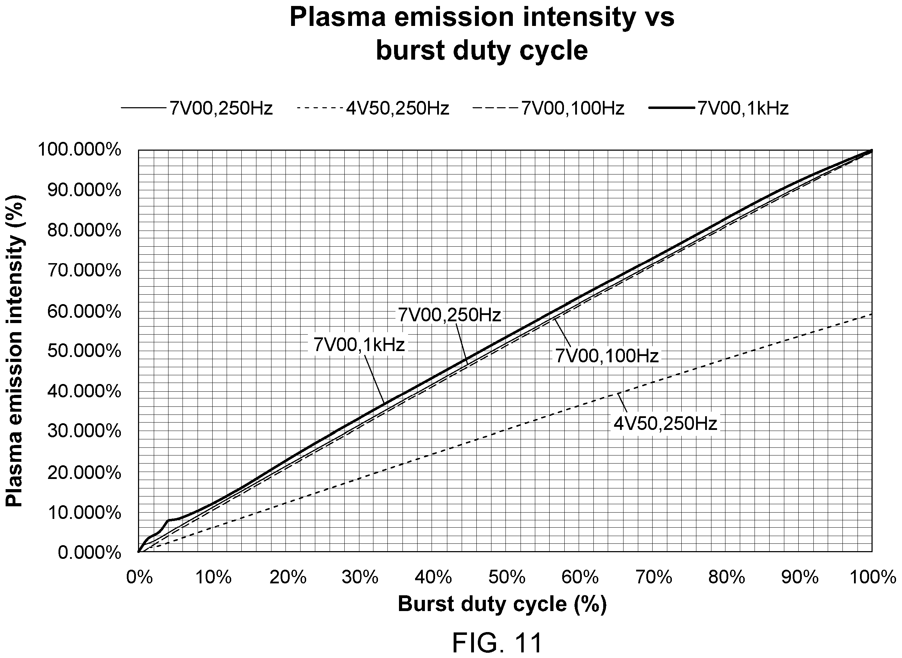

Figure 11 illustrates the relation between the burst duty cycle and the plasma emission intensity. As expected, the plasma emission increases as the burst duty cycle is increased. The burst duty cycle, the voltage and the frequency may affect the plasma emission.

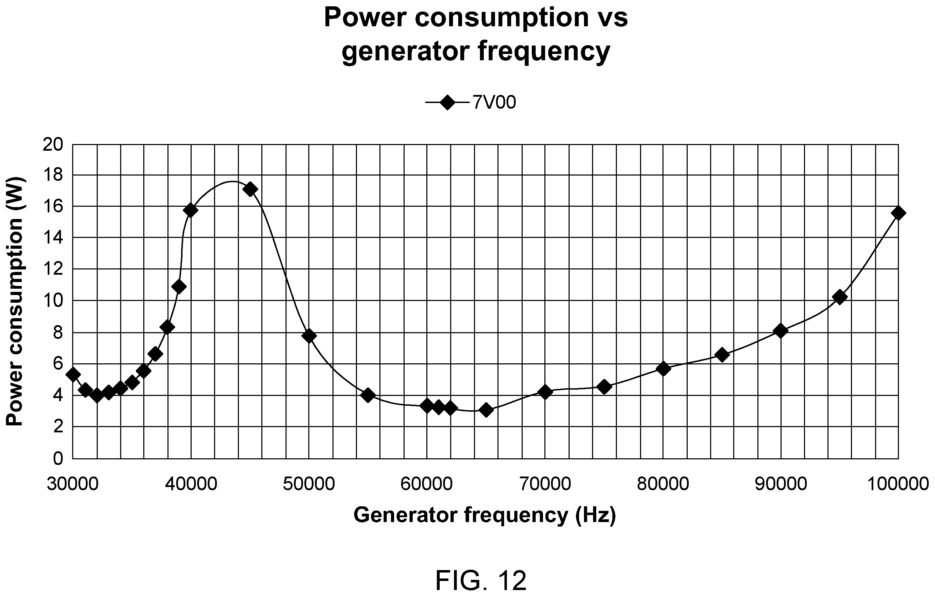

Figure 12 illustrates the relation between the plasma generator frequency and the power consumption of the system. It will be noted that the power consumption is greatly affected by the operating frequency of the plasma generator. Of note, the disclosed techniques allow determining operating conditions at which the power consumption is minimal or close to a minimum. The operating frequency, the burst duty cycle, the current, the voltage and the power are interrelated in systems such as the ones having been described.

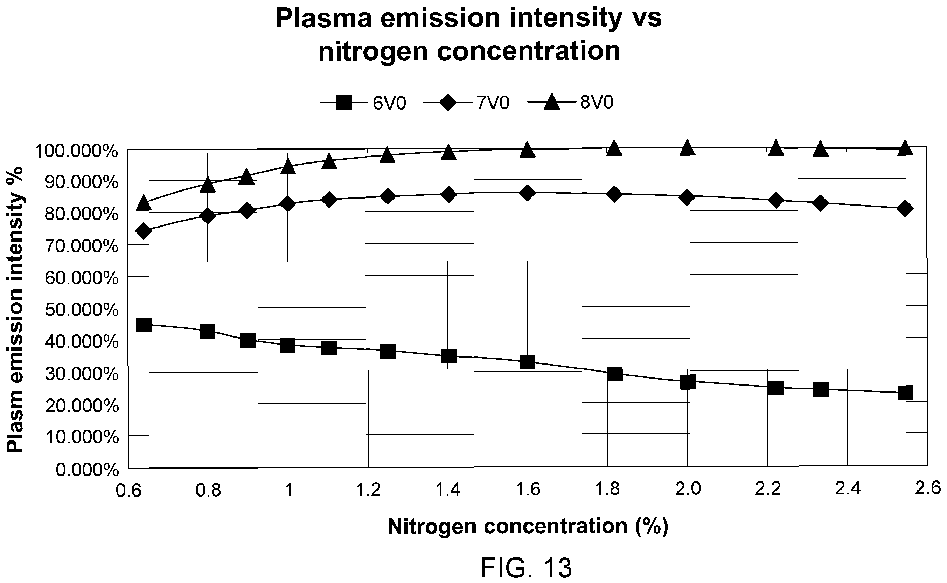

Figure 13 illustrates the relation between the plasma emission intensity and the nitrogen concentration in a test sample. It will be noted that the nitrogen concentration or change thereof may affect the plasma emission intensity. Power consumption is greatly affected by the operating frequency of the plasma generator. The concentration of nitrogen, the nitrogen flow, the argon flow and the voltage may be interrelated.

Several alternative embodiments and examples have been described and illustrated herein. The embodiments described above are intended to be exemplary only. A person skilled in the art would appreciate the features of the individual embodiments, and the possible combinations and variations of the components. The present examples and embodiments, therefore, are to be considered in all respects as illustrative and not restrictive.

## Claims

1. A method (100) for chromatographically analyzing a test sample (30), the method (100) comprising:
obtaining a sample chromatogram of the test sample (30) with a chromatography system (20), the chromatography system (20) comprising a detector (22) having an adjustable response factor; and
adjusting, while obtaining the sample chromatogram, the response factor of the detector (22) based on a compensation signal for compensating expected chromatographic artefacts to obtain an artefact-compensated sample chromatogram;
circulating the test sample (30) in a plasma chamber (24) of the detector (22); and
generating a plasma from the test sample (30), said generating the plasma in the test sample (30) comprising applying a plasma generating field across the plasma chamber (24) to generate the plasma from the test sample (30),
**characterized in that**
said adjusting the response factor of the detector (22) comprises adjusting the plasma generating field.

2. The method (100) of claim 1, further comprising determining the compensation signal.

3. The method (100) of claim 2, wherein said determining the compensation signal is based at least partly on calibration data, the calibration data comprising artefact information about the expected chromatographic artefacts, the method (100) further comprising obtaining the calibration data from a control sample chromatographically representative of the test sample (30).

4. The method (100) of claim 2, wherein said determining the compensation signal is based on calibration data obtained from a control sample and a scaling factor representative of a deviation between the calibration data and sample data measured during said obtaining the sample chromatogram.

5. The method (100) of claim 2, wherein the expected chromatographic artefacts are real-time expected chromatographic defects, the response factor of the detector (22) being adjusted in real-time or near real-time.

6. The method (100) of any one of claims 1 to 5, wherein the compensation signal comprises a peak tailing compensation signal component, wherein the peak tailing compensation signal component is determined based on a mirror function.

7. The method (100) of any one of claims 1 to 6, wherein the compensation signal comprises a base line drift compensation signal component.

8. The method (100) of claim 2, wherein said determining the compensation signal is performed entirely during said obtaining the sample chromatogram and said adjusting the response factor of the detector (22).

9. The method (100) of claim 1, further comprising measuring an optical emission of the plasma, the optical emission being representative of the test sample (30), wherein the optical emission is a spectral line representative of an analyte present in the test sample (30), said measuring the optical emission comprises obtaining a reference signal, obtaining an emission signal, and subtracting the reference signal from the emission signal.

10. The method (100) of any one of claims 1 to 9, further comprising pre-processing the artefact-compensated chromatogram, wherein said pre-processing the artefact-compensated chromatogram comprises at least one of: filtering, adjusting, and correcting one or more peaks of the artefact-compensated chromatogram.

11. The method (100) of any one of claims 1 to 10, further comprising processing the artefact-compensated chromatogram to determine at least one property of the test sample (30), wherein said processing the artefact-compensated chromatogram comprises performing at least one mathematical operation on the artefact-compensated chromatogram or at least one peak thereof.

12. A chromatography system (20) for chromatographically analyzing a test sample (30), the system (20) comprising:
a detector (22) having an adjustable response factor, the detector (22) being configured for obtaining a sample chromatogram of the test sample (30); and
a control and processing unit (28) coupled to the detector (22) and configured for:
adjusting, while the sample chromatogram is obtained by the detector (22), the response factor of the detector (22) based on a compensation signal for compensating expected chromatographic artefacts to obtain an artefact-compensated sample chromatogram,
wherein the detector (22) is a plasma-based detector, the plasma-based detector comprising:
a plasma chamber (24) configured for receiving the test sample (30);
a plasma generator (26) configured for applying a plasma generating field across the plasma chamber (24) to generate a plasma from the test sample (30), and
an optical detection module (29) configured for detecting optical emissions emitted from the plasma and producing a detection signal, the sample chromatogram being generated from the detection signal,
**characterized in that**
the control and processing unit (28) is configured for adjusting the response factor of the detector (22) by adjusting the plasma generating field.

## Patentansprüche

1. Ein Verfahren (100) zur chromatographischen Analyse einer Testprobe (30), wobei das Verfahren (100) Folgendes umfasst:
das Erstellen eines Proben-Chromatogramms der Testprobe (30) mit einem Chromatographiesystem (20), wobei das Chromatographiesystem (20) einen Detektor (22) mit einem einstellbaren Responsefaktor umfasst; und während des Erstellens des Proben-Chromatogramms das Einstellen des Responsefaktors des Detektors (22) anhand eines Kompensationssignals zum Kompensieren zu erwartender chromatographischer Artefakte, um ein Proben-Chromatogramm mit Kompensation der Artefakte zu erhalten;
das Zirkulieren der Testprobe (30) in einer Plasmakammer (24) des Detektors (22) und
das Erzeugen eines Plasmas aus der Testprobe (30), wobei das Erzeugen des Plasmas in der Testprobe (30) das Anlegen eines plasmaerzeugenden Feldes über die Plasmakammer (24) hinweg, um das Plasma aus der Testprobe (30) zu erzeugen, umfasst;
**dadurch gekennzeichnet, dass**
das Einstellen des Responsefaktors des Detektors (22)
das Einstellen des plasmaerzeugenden Feldes umfasst.

2. Das Verfahren (100) gemäß Anspruch 1, das weiter das Bestimmen des Kompensationssignals umfasst.

3. Das Verfahren (100) gemäß Anspruch 2, wobei das Bestimmen des Kompensationssignals zumindest teilweise auf Kalibrierdaten basiert, wobei die Kalibrierdaten Artefakt-Informationen über die zu erwartenden chromatographischen Artefakte umfassen, wobei das Verfahren (100) weiter das Gewinnen der Kalibrierdaten aus einer Kontrollprobe umfasst, die chromatographisch repräsentativ für die Testprobe (30) ist.

4. Das Verfahren (100) gemäß Anspruch 2, worin das Bestimmen des Kompensationssignals auf Kalibrierdaten, die aus einer Kontrollprobe gewonnen werden, und einem Skalierungsfaktor basiert, der repräsentativ für eine Abweichung zwischen den Kalibrierdaten und den Probendaten ist, die während des Erstellens des Proben-Chromatogramms gemessen werden.

5. Das Verfahren (100) gemäß Anspruch 2, worin die zu erwartenden chromatographischen Artefakte in Echtzeit erwartete chromatographische Defekte sind, wobei der Responsefaktor des Detektors (22) in Echtzeit oder nahezu in Echtzeit angepasst wird.

6. Das Verfahren (100) gemäß einem beliebigen der Ansprüche 1 bis 5, worin das Kompensationssignal eine Peak-Tailing-Kompensationssignalkomponente umfasst, wobei die Peak-Tailing-Kompensationssignalkomponente anhand einer Spiegelfunktion bestimmt wird.

7. Das Verfahren (100) gemäß einem beliebigen der Ansprüche 1 bis 6, worin das Kompensationssignal eine Basisliniendrift-Kompensationssignalkomponente umfasst.

8. Das Verfahren (100) gemäß Anspruch 2, worin das Bestimmen des Kompensationssignals vollständig während des Erstellens des Proben-Chromatogramms und des Anpassens des Responsefaktors des Detektors (22) durchgeführt wird.

9. Das Verfahren (100) gemäß Anspruch 1, das weiter das Messen einer optischen Emission des Plasmas umfasst, wobei die optische Emission repräsentativ für die Testprobe (30) ist, wobei die optische Emission eine Spektrallinie ist, die repräsentativ für einen Analyten in der Testprobe (30) ist, wobei das Messen der optischen Emission das Erhalten eines Referenzsignals, das Erhalten eines Emissionssignals und das Subtrahieren des Referenzsignals vom Emissionssignal umfasst.

10. Das Verfahren (100) gemäß einem beliebigen der Ansprüche 1 bis 9, das weiter das Vorverarbeiten des Chromatogramms mit Kompensation der Artefakte umfasst, wobei das Vorverarbeiten des Chromatogramms mit Kompensation der Artefakte mindestens eines von Folgendem umfasst: Filtern, Anpassen und Korrigieren eines oder mehrerer Peaks des Chromatogramms mit Kompensation der Artefakte.

11. Das Verfahren (100) gemäß einem beliebigen der Ansprüche 1 bis 10, das weiter das Verarbeiten das Chromatogramms mit Kompensation der Artefakte, um mindestens eine Eigenschaft der Testprobe (30) zu bestimmen, umfasst, wobei das Verarbeiten des Chromatogramms mit Kompensation der Artefakte das Durchführen mindestens einer mathematischen Operation an dem Chromatogramm mit Kompensation der Artefakte oder mindestens einem Peak davon umfasst.

12. Ein Chromatographiesystem (20) zum chromatographischen Analysieren einer Testprobe (30), wobei das System (20) Folgendes umfasst:
einen Detektor (22) mit einem anpassbaren Responsefaktor, wobei der Detektor (22) ausgebildet ist, um ein Proben-Chromatogramm der Testprobe (30) zu erzeugen; und
eine Steuerungs- und Verarbeitungseinheit (28), gekoppelt mit dem Detektor (22) und ausgebildet, um,
während das Proben-Chromatogramm vom Detektor (22) erstellt wird, den Responsefaktor des Detektors (22) auf der Grundlage eines Kompensationssignals zum Kompensieren zu erwartender chromatographischer Artefakte anzupassen, um ein Proben-Chromatogramm mit Kompensation der Artefakte zu erhalten,
wobei der Detektor (22) ein plasmabasierter Detektor ist, der Folgendes umfasst:
eine Plasmakammer (24), ausgebildet, um die Testprobe (30) aufzunehmen;
einen Plasmagenerator (26), ausgebildet, um ein plasmaerzeugendes Feld über die Plasmakammer (24) hinweg anzulegen, um ein Plasma aus der Testprobe (30) zu erzeugen, und
ein optisches Erfassungsmodul (29), ausgebildet, um optische Emissionen zu erfassen, die vom Plasma ausgesendet werden, und ein Erfassungssignal zu erzeugen, wobei das Proben-Chromatogramm aus dem Erfassungssignal erzeugt wird;
**dadurch gekennzeichnet, dass**
die Steuerungs- und Verarbeitungseinheit (28) ausgebildet ist, um den Responsefaktor des Detektors (22) durch Anpassung des plasmaerzeugenden Feldes anzupassen.

## Revendications

1. Procédé (100) d'analyse chromatographique d'un échantillon d'essai (30), le procédé (100) comprenant :
l'obtention d'un chromatogramme de l'échantillon d'essai (30) à l'aide d'un système de chromatographie (20), le système de chromatographie (20) comprenant un détecteur (22) ayant un facteur de réponse réglable ; et le réglage, pendant l'obtention du chromatogramme de l'échantillon, du facteur de réponse du détecteur (22) sur la base d'un signal de compensation destiné à compenser artefacts chromatographiques attendus afin d'obtenir un chromatogramme de l'échantillon compensé en artefacts ;
faire circuler l'échantillon d'essai (30) dans une chambre à plasma (24) du détecteur (22) ; et
générer un plasma à partir de l'échantillon d'essai (30), ladite génération de plasma dans l'échantillon d'essai (30) comprenant l'application d'un champ de génération de plasma à travers la chambre à plasma (24) pour générer le plasma à partir de l'échantillon d'essai (30),
**caractérisé en ce que** ledit réglage du facteur de réponse du détecteur (22) comprend
l'ajustement du champ de génération de plasma.

2. Procédé (100) selon la revendication 1, comprenant en outre la détermination du signal de compensation.

3. Procédé (100) selon la revendication 2, où ladite détermination du signal de compensation est basée au moins en partie sur des données d'étalonnage, les données d'étalonnage comprenant des informations d'artefact concernant les artefacts chromatographiques attendus, le procédé (100) comprenant en outre l'obtention des données d'étalonnage à partir d'un échantillon de contrôle chromatographiquement représentatif de l'échantillon d'essai (30).

4. Procédé (100) selon la revendication 2, où ladite détermination du signal de compensation repose sur des données d'étalonnage obtenues à partir d'un échantillon de contrôle et d'un facteur d'échelle représentatif d'un écart entre les données d'étalonnage et les données d'échantillon mesurées lors de ladite obtention du chromatogramme de l'échantillon.

5. Procédé (100) selon la revendication 2, où les artefacts chromatographiques attendus sont des défauts chromatographiques attendus en temps réel, le facteur de réponse du détecteur (22) étant ajusté en temps réel ou en temps quasi réel.

6. Procédé (100) selon l'une quelconque des revendications 1 à 5, où le signal de compensation comprend une composante de signal de compensation de queue de pic, ladite composante de signal de compensation de queue de pic étant déterminée sur la base d'une fonction miroir.

7. Procédé (100) selon l'une quelconque des revendications 1 à 6, où le signal de compensation comprend une composante de signal de compensation de dérive de la ligne de base.

8. Procédé (100) selon la revendication 2, où ladite détermination du signal de compensation est effectuée entièrement pendant ladite obtention du chromatogramme de l'échantillon et ledit ajustement du facteur de réponse du détecteur (22).

9. Procédé (100) selon la revendication 1, comprenant en outre la mesure d'une émission optique du plasma, l'émission optique étant représentative de l'échantillon d'essai (30), où l'émission optique est une raie spectrale représentative d'un analyte présent dans l'échantillon d'essai (30), ladite mesure de l'émission optique comprenant l'obtention d'un signal de référence, l'obtention d'un signal d'émission, et la soustraction du signal de référence du signal d'émission.

10. Procédé (100) selon l'une quelconque des revendications 1 à 9, comprenant en outre le prétraitement du chromatogramme compensé en artefacts, où ledit prétraitement du chromatogramme compensé en artefacts comprend au moins l'une des opérations suivantes : filtrer, ajuster et corriger un ou plusieurs pics du chromatogramme compensé en artefacts.

11. Procédé (100) selon l'une quelconque des revendications 1 à 10, comprenant en outre le traitement du chromatogramme compensé en artefacts pour déterminer au moins une propriété de l'échantillon d'essai (30), où ledit traitement du chromatogramme compensé en artefacts comprend l'exécution d'au moins une opération mathématique sur le chromatogramme compensé en artefacts ou sur au moins un pic de celui-ci.

12. Système de chromatographie (20) destiné à analyser par chromatographie un échantillon d'essai (30), le système (20) comprenant :
un détecteur (22) ayant un facteur de réponse réglable, le détecteur (22) étant configuré pour obtenir
un chromatogramme de l'échantillon d'essai (30) ; et
une unité de commande et de traitement (28) couplée au détecteur (22) et configurée pour :
ajuster, pendant que le chromatogramme de l'échantillon est obtenu par le détecteur (22), le facteur de réponse du détecteur (22) sur la base d'un signal de compensation destiné à compenser les artefacts chromatographiques attendus afin d'obtenir un chromatogramme de l'échantillon compensé en artefacts,
où le détecteur (22) est un détecteur à plasma, le détecteur à plasma comprenant :
une chambre à plasma (24) configurée pour recevoir l'échantillon d'essai (30) ;
un générateur de plasma (26) configuré pour appliquer un champ générateur de plasma à travers la chambre à plasma (24) afin de générer un plasma à partir de l'échantillon d'essai (30), et
un module de détection optique (29) configuré pour détecter les émissions optiques émises par le plasma et produire un signal de détection, le chromatogramme de l'échantillon étant généré à partir du signal de détection,
**caractérisé en ce que**
l'unité de commande et de traitement (28) est configurée pour ajuster le facteur de réponse du détecteur (22) en ajustant le champ de génération de plasma.
